# EUROPÄISCHE PATENTANMELDUNG

(11) **EP 0 609 669 A1**
(43) Veröffentlichungstag der Anmeldung: **10.08.1994**
(21) Anmeldenummer: 94100388.1
(22) Anmeldetag: 12.01.1994
(51) Int. Cl.: B65G 47/57

(54) **Beschickungsvorrichtung für eine Palettiervorrichtung**

(30) Priorität: 05.02.1993 DE 4303413
(71) Anmelder: PROFINISH S.A., CH-6900 Lugano-Paradiso (CH)
(72) Erfinder: Kracht, Heinrich, D-32312 Lübbecke 5 (DE)
(74) Vertreter: Patentanwälte Dr. Solf & Zapf

(57) **Zusammenfassung**

Die Erfindung betrifft eine Beschickungsvorrichtung für eine Palettiervorrichtung zum Stapeln von quaderförmigen Produkten, insbesondere von Büchern, Zeitschriften oder dergleichen Druckerzeugnissen, auf einer Palette, die in der Palettiervorrichtung während des Stapelns ortsfest verfahren wird, wobei zum Stapeln eine Stapeleinrichtung verwendet wird, die über der Palette höhen- und seitenverfahrbar ist. Diese Vorrichtung ist gekennzeichnet durch eine Paternostereinrichtung (1) mit einer die Produkte (3) übernehmenden Übernahmestation (A) und einer die Produkte (3) an die Stapeleinrichtung (4) übergebenden Übergabestation (B), die einen horizontal angeordneten Endlosförderer (21) aufweist, und in deren Bereich das Transportorgan der Paternostereinrichtung (1) quer zur vertikalen Paternosterebene (C) sowie parallel zu dem Endlosförderer (21) entlang einer gemeinsamen Strecke (D) geführt ist, der mit der Transportgeschwindigkeit der Paternostereinrichtung (1) läuft, und dessen Obertrum dieselbe Laufrichtung aufweist, wie das die Querstrecke (D) durchlaufende Transportorgan der Paternostereinrichtung (1).

## Beschreibung

Die Erfindung betrifft eine Beschickungsvorrichtung für eine Palettiervorrichtung zum Stapeln von quaderförmigen Produkten z.B. eines Druckereibetriebes, insbesondere von Büchern, Zeitschriften oder dergleichen auf einer Palette, die in der Palettiervorrichtung während des Stapeln ortsfest, z.B. auf einer Rollenbahn lagert und nach dem Füllen aus der Palettiervorrichtung verfahren wird, wobei zum Stapeln eine Stapeleinrichtung verwendet wird, die über der Palette höhen- und seitenverfahrbar ist und demgemäß je nach Füllungsgrad der Palette zu verfahren ist. Derartige Palettiervorrichtungen werden z.B. in der DE-C2 31 39 828, DE-A1 34 11 295 und DE-A1 35 27 902 beschrieben.

Die Stapeleinrichtungen stehen mit einer Beschickungsvorrichtung in Verbindung, die die zu stapelnden Produkte von einem Lagerort oder einer Antransporteinrichtung übernimmt und zur Stapeleinrichtung transportiert. In der Stapeleinrichtung werden z.B. Reihen oder Vorstapel aus den Produkten gebildet, die dann auf die Palette abgeschoben oder auf der Palette abgelegt werden.

Die bekannten Beschickungsvorrichtungen bestehen in der Regel aus nebeneinander auf Abstand angeordneten Riemchen aufgebauten Zuführtransportbändern, die einendig am Lagerort oder am Auslauf der Antransporteinrichtung angeordnet und anderendig an der Stapeleinrichtung befestigt sind. Da die Stapeleinrichtung sich bewegt, muß sich das an der Stapeleinrichtung befestigte Ende des Zuführtransportbandes ebenfalls entsprechend bewegen können. Gewährleistet wird dies zum Beispiel mit teleskopartig auseinanderziehbaren Förderbändern, die anderendig gegebenenfalls auch noch um eine vertikale Achse schwenkbar gelagert sein können (DE-A1 35 27 902). Derartige Zuführeinrichtungen sind sehr aufwendig gebaut und somit teuer. Sie erfordern - weil sie der Stapeleinrichtung vorgeordnet sind - insbesondere aber sehr viel Raum, der meist nicht zur Verfügung steht.

Aus der DE-A1-32 06 083 ist ein Senkrechtförderer bekannt, durch den Produkte von einer horizontalen Förderebene auf eine andere horizontale Förderebene gefördert werden. Der Senkrechtförderer umfaßt eine Paternostereinrichtung, deren beiden vertikalen Förderstrecken Rollenförderer zugeordnet sind. Als Transportorgan der Paternostereinrichtung dienen Transportgabeln, die so ausgelegt sind, daß sie die Rollenförderer im Lauf ihres vertikalen Transports durchsetzen und dabei die Produkte von den Rollenförderern abnehmen bzw. auf diesen ablegen. Nachteilig am Aufbau dieses bekannten Senkrechtförderers ist, daß die Übergabe von den Gabeln der Paternostereinrichtung auf den austragsseitigen Rollenförderer schlagartig erfolgt, und daß die Produkte auf dieser Walzenbahn abrupt in horizontaler Richtung beschleunigt werden, weshalb sich dieser bekannte Förderer nicht zur Zusammenarbeit mit einer nachgeschalteten Stapeleinrichtung eignet, da die Stapel entweder umstürzen oder in unsauberer Folge aufgebaut werden.

Aufgabe der Erfindung ist, eine einfach aufgebaute Beschickungseinrichtung für eine Palettiervorrichtung der eingangs genannten Art zu schaffen, die bei geringem Raumbedarf einen reibungslosen Betriebsablauf gewährleistet.

Diese Aufgabe wird durch die Merkmale des Anspruchs 1 gelöst. Vorteilhafte Weiterbildungen der Erfindung werden in den Unteransprüchen gekennzeichnet.

Anhand der Zeichnung wird die Erfindung im folgenden beispielhaft näher erläutert. Es zeigen:

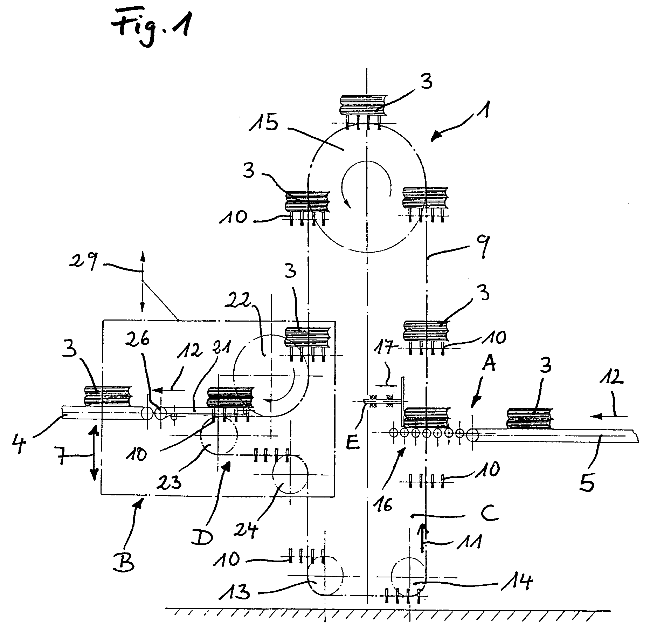

- Fig. 1: schematisch eine Seitenansicht der Beschickungsvorrichtung;
- Fig. 2: perspektivisch und schematisch die Walzenbahn der Übernahmestation der Beschickungseinrichtung von Fig. 1;
- Fig. 3: eine schematische Ansicht der Zuordnung des aus einzelnen Bändern aufgebauten Endlosförderers der Übergabestation zu dem mit diesem Endlosförderer zusammenarbeitenden Transportorgan der Paternostereinrichtung der Beschickungsvorrichtung von Fig. 1 sowie eine Seitenansicht des Transportorgans.

Die erfindungsgemäße Beschickungsvorrichtung umfaßt eine Paternostereinrichtung 1, die zwischen einer in Transportrichtung 12 der zu stapelnden quaderförmigen Produkte 3 vorgeordneten schematisch dargestellten Antransporteinrichtung 2 und einer in Transportrichtung der Produkte 3 nachgeordneten, ebenfalls nur schematisch dargestellten Stapeleinrichtung 4 vorgesehen ist.

Die Antransporteinrichtung 2 kann wie üblich aufgebaut sein und ein Transportband 5 aufweisen, auf dem die Produkte 3 im Abstand hintereinander antransportiert werden. Sie kann auch mit einer an sich bekannten, nicht dargestellten Wendeeinrichtung ausgerüstet sein, mit der die Produkte 3 um eine vertikale Achse gedreht werden können.

Die Stapeleinrichtung 4 ist Teil einer nicht dargestellten an sich bekannten Palettiervorrichtung, wobei die Stapeleinrichtung in Doppelpfeilrichtung 7 auf und ab fahrbar angeordnet ist. Derartige Stapeleinrichtungen werden z.B. in den einleitend genannten Druckschriften beschrieben.

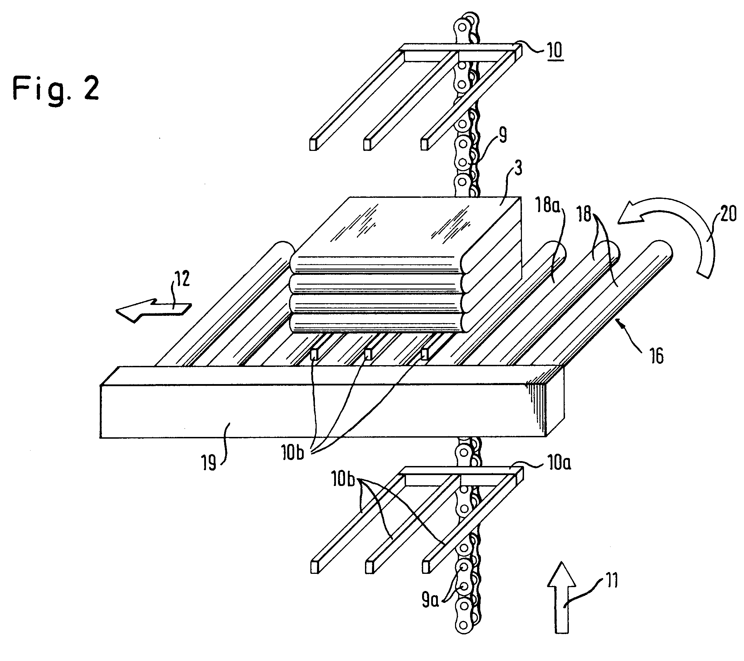

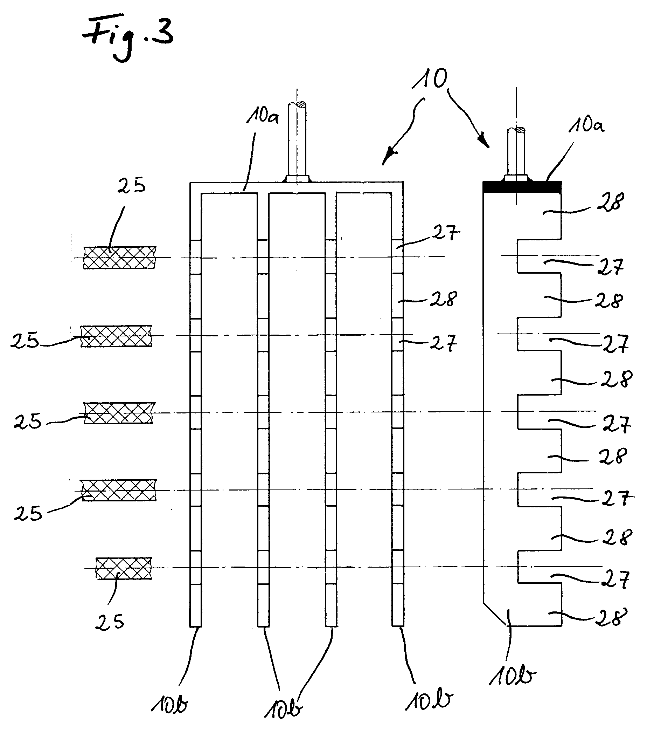

Die erfindungsgemäße Paternostereinrichtung 1 weist ein im wesentlichen nicht dargestelltes, in die Höhe bauendes schmales Gestell auf, in dem an mindestens einer endlos in einer vertikalen Ebene C geführten Gliederkette 9 im gleichen Abstand X voneinander angeordnete Transportgabeln 10 in Pfeilrichtung 11 paternosterartig geführt werden. Die Endlosführung der Gliederkette 9 in der Vertikalebene C erfolgt bevorzugt über zwei zusammenwirkende, in Laufrichtung der Kette 9 in einer horizontalen Ebene auf Abstand hintereinander angeordnete untere Kettenräder 13,14 und ein oberes Kettenrad 15. Die horizontalen Achsen der Kettenräder 13,14,15 liegen senkrecht zur Transportrichtung 12. Demgemäß sind auch die Gliederstifte 9a (Fig. 3) der Gliederkette 9 horizontal und senkrecht zur Transportrichtung 12 angeordnet. Jede Transportgabel 10 weist einen Gabelquersteg 10a und senkrecht davon abstehende, auf gleichen Abstand voneinander angeordnete Gabelzinken 10b auf (Fig. 2, 3). Der Gabelquersteg 10a erstreckt sich parallel zur Transportrichtung 12 und sitzt derart auf der Kette 9, daß er und damit auch die nebeneinander angeordnete Reihe der sich senkrecht zur Transportrichtung 12 erstreckenden Gabelzinken 10b immer eine horizontale Lage einnehmen. Die Gabelzinken 10b sind, wie in Fig. 3 gezeigt, mit (in Fig. 2 nicht dargestellten) Ausnehmungen strukturiert, deren Zweck anhand der Fig. 3 nachfolgend näher beschrieben wird.

Mit den Transportgabeln 10 wirken zwei der Paternostereinrichtung 1 zugeordnete, unterschiedlich aufgebaute Übernahme- bzw. Übergabestationen A bzw. B zusammen.

Die Übernahmestation A ist der Antransporteinrichtung 2 nachgeordnet und umfaßt eine Walzenbahn 16, die einlaufseitig am Auslaufende des Transportbandes 5 der Antransporteinrichtung 2 beginnt, sich in den Bereich der Gabelbahn und ein wenig in Transportrichtung darüber hinausreichend in die Paternostereinrichtung 1 erstreckt. Wie Fig. 2 zeigt, besteht die Walzenbahn 16 aus in Transportrichtung 12 auf bestimmtem Abstand voneinander horizontal angeordneten Transportwalzen 18, deren Achsen sich senkrecht zur Transportrichtung 12 erstrecken und die in Pfeilrichtung 19 drehbar antreibbar sind, so daß sich auf ihnen befindliche Produkte 3 in Transportrichtung 12 bewegen. Die Achsen der Transportwalzen 18 der Walzenbahn 16 stecken jeweils in einem sich in Transportrichtung erstreckenden Tragegestell 19, das auch zumindest Teile der Antriebseinrichtung für die Walzen aufnimmt (nicht dargestellt). Anderendig sind die Transportwalzen 18 nicht miteinander verbunden, so daß sie frei aus dem Tragegestell 19 kragen. Die Walzenbahn 16 ist so angeordnet, daß die Zinken 10b frei durch die Lücken 18a zwischen benachbarten Walzen 18 fahren können. Demgemäß ist jedes Tragegestell 19 den Gabelquerstegen 10a bzw. der Kette 9 gegenüberliegend angeordnet, wobei die Gabelzinken 10b, die schmaler sind als die Lücken 18a, und - wie in Fig. 3 dargestellt - die Lücken zwischen den Zinken 10b und den Walzen 18 entsprechend aufeinander abgestimmt sind. Aus in Transportrichtung vorderem Ende der Walzenbahn 16 ist eine in Richtung des Doppelpfeils 17 parallel zur Horizontalen verstellbare Anschlageinrichtung E vorgesehen, die für eine bestimmungsgemäße seitliche Positionierung der Produkte 3 in bezug auf die Transportgabeln 10 sorgt.

Die Übergabestation B umfaßt erfindungsgemäß einen Endlosförderer 21, der sich mit seinem Produktübergabeende an das Produktübernahmeende der Stapeleinrichtung 4 anschließt, und der sich mit seinem anderen Ende in einer überlappenden Anordnung mit einer horizontal geführten Querstrecke D der Paternostereinrichtung 1 befindet. Die Querstrecke D ist von dem abwärtslaufenden vertikalen Abschnitt der Kette 9 mit Hilfe dreier Umlenkkettenräder 22, 23 und 24 gebildet. Für eine Umlenkung der Kette 9 von ihrem vertikalen Lauf in den horizontalen Lauf innerhalb der Strecke D dient das Kettenrad 22, das erfindungsgemäß mit einem relativ großen Durchmesser ausgebildet ist, um eine sanfte, über ein relativ großes Kreisbogensegment verlaufende Umlenkung der Kette 9 und damit der auf den Gabeln 10 getragenen Produkte 3 zu gewährleisten. Das mittlere 23 der drei Umlenkkettenräder 22-24 weist einen kleineren Durchmesser auf als das große, voraus angeordnete Kettenrad 22, und dieses mittlere Kettenrad 23 befindet sich mit seinem Zentrum im paternostereinrichtungsseitigen Drittel des Endlosförderers 21, sowie im wesentlichen knapp unterhalb des Untertrums dieses Förderers 21. Das dritte 24 der drei Umlenkkettenräder 22-24, das dem mittleren Kettenrad 23 in Laufrichtung der Kette 9 nachgeordnet ist, dient zur Umlenkung der Kette 9 von ihrer horizontalen Laufrichtung innerhalb der Querstrecke C in den vertikalen Verlauf der vertikalen Paternosterstrecke.

Wie in Fig. 3 beispielhaft gezeigt, ist der Endlosförderer 21 aus einer Mehrzahl von, im dargestellten Ausführungsbeispiel aus fünf Riemen 25 aufgebaut, die über eine stapeleinrichtungsseitige Riemenwalze 26 angetrieben und am anderen Ende durch eine in Fig. 3 nicht dargestellte Profilwalze umgelenkt werden, die seitlich nebeneinander auf einer Drehachse angeordnete Riemenscheiben umfaßt, auf denen die fünf Riemen 25 ablaufen.

Um sicherzustellen, daß die Transportgabeln 10 die auf ihnen ruhenden Produkte 3 ruckfrei an das Transportband 21 abzugeben vermögen, verlaufen die Gabeln 10 auf der Querstrecke C der Kette 9 parallel zum Obertrum des Transportbands 21, das mit derselben Geschwindigkeit unter Richtung umläuft wie die Kette 9, und die Zinken 10b der Gabel 10 sind mit seitlich voneinander beabstandeten Ausnehmungen 27 derart versehen, daß die Zinken mit ihren nicht ausgenommenen Abschnitten 28 zwischen den Riemen 25 hindurch bzw. an diesen vorbeigreifen und ein Stück über die Riemen 25 nach oben vorstehen, so daß die auf den Zinken 10b ruhenden Produkte 3 reibungslos auf das Transportband 21 überführt werden, wenn die Gabeln 10b beim Umlauf mit der Kette 9 um das mittlere Umlenkkettenrad 23 nach unten wegschwenken. Um sicherzustellen, daß die Gabeln 10 bei möglichst flacher Ausbildung mit ihren nicht ausgenommenen Abschnitten 28 über das Obertrum des Transportbandes vorstehen, sind Ober- und Untertrum im Eingriffsbereich der Gabelzinken 10b so eng wie möglich zueinander geführt. Erreicht wird diese Engführung durch die Verwendung einer Riemenscheibe entsprechend kleinen Durchmessers an dem Ende des Förderers 21, die der durchmessergrößeren Antriebsriemenscheibe 26 gegenüberliegt sowie durch eine weitere Riemenscheibe, die der Riemenscheibe 26 unmittelbar nachgeordnet ist und im Eingriff mit dem Untertrum des Förderers 21 steht, um dieses auf den für die Engführung erforderlichen Abstand zu leiten.

Die Transportgabeln gemäß Fig. 3 umfassen alternativ zu der in Fig. 2 dargestellten Gabel 10 vier Gabelzinken 10b, die mit Ausnehmungen strukturiert sind, um in der erforderlichen Weise erfindungsgemäß im verzahnten Eingriff mit den einzelnen Riemen 25 des Transport-bands 21 zu gelangen.

Wie durch den Doppelpfeil 29 angedeutet, kann alternativ zu einer ausschließlichen vertikalen Verstellung der Stapeleinrichtung 4 eine Verstellung dieser Einrichtung zusammen mit dem Endlosband 21 und den Umlenkkettenrädern 22-24 vorgesehen sein. Zu diesem Zweck sind die genannten Bauteile 4, 21 sowie 22-24 zusammen an eine Hubeinrichtung angeschlossen.

Die Funktion der erfindungsgemäßen Beschickungsvorrichtung ist folgende: Ein Produkt 3, das auch ein Produktstapel sein kann, wird vom Transportband 5 auf die Walzenbahn 16 übergeben und in den Bereich der Gabelbahn transportiert. Eine Transportgabel 10 übernimmt von unten kommend mit ihren die Walzenlücken 18a der Walzenbahn 16 durchfahrenden Zinken das Produkt 3 und transportiert es in Pfeilrichtung 11 nach oben und nach Umlenkung der Kette 9 durch das Kettenrad 15 nach unten, bis die Transportgabel 10 das Umlenkkettenrad 22 großen Durchmessers erreicht, durch das die Gabel 10 zusammen mit dem auf sie angeordneten Produkt 3 um 90° aus einer vertikalen Transportrichtung in die horizontale Transportrichtung 12 überführt wird. Anschließend gelangt die Gabel 10 in den Eingriffbereich mit dem Endlosband 21 derart, daß die Zinken 10b der Gabel 10 zwischen die seitlich auf Abstand gesetzten Riemen 25 des Bandes 21 eingreifen, und mit den produkttragenden Oberseiten der Zinkenabschnitte 28 das Produkt im wesentlichen reibungsfrei vollständig unmittelbar über den Riemen 25 positionieren, bevor der in Laufrichtung vorne positionierte Gabelzinken 10b als erster der Zinken in den Umlenkbereich des Kettenrads 23 gelangt, durch das die Zinken 10b aufeinanderfolgend aus dem Eingriffbereich mit den Riemen 25 herausgeführt werden, wodurch das Produkt 3 aufgrund der Abstimmung der Laufgeschwindigkeit des Bands 21 mit der Laufgeschwindigkeit der Kette 9 ruckfrei und präzise auf das Band 21 bzw. die Riemen 25 abgesetzt wird, woraufhin das Produkt 3 durch das Transportband 21 zur Stapeleinrichtung 4 und die Gabel 10 über das Umlenkkettenrad 24 in den unteren Teil der abfallenden vertikalen Strecke der Paternostereinrichtung 1 überführt werden.

Die erfindungsgemäße Paternostereinrichtung 1 ist zusammen mit der Stapeleinrichtung 4 bevorzugt senkrecht zur Transportrichtung 12 horizontal verfahrbar angeordnet, insbesondere für die Verwendung in einer Palettiervorrichtung, in der die Palette ortsfest lagert und die Stapeleinrichtung 4 nicht nur in Doppelpfeilrichtung 7 bzw. 29 auf und ab, sondern auch senkrecht zur Transportrichtung 12 horizontal verfahrbar ist. Selbstverständlich ist dann auch die Walzenbahn 16 entsprechend eingerichtet.

## Patentansprüche

1. Beschickungsvorrichtung für die Stapeleinrichtung einer Palettiervorrichtung zum Stapeln von quaderförmigen Produkten, insbesondere von Büchern, Zeitschriften oder dergleichen Druckerzeugnissen, auf einer Palette, die in der Palettiervorrichtung während des Stapelns ortsfest lagert und nach dem Füllen aus der Palettiervorrichtung verfahren wird, wobei die Stapeleinrichtung über der Palette vorzugsweise höhen- und seitenverfahrbar ist,
**gekennzeichnet** durch
eine als Senkrechtförderer arbeitende Paternostereinrichtung (1) mit Lagereinrichtungen (10), die mit dem Transportorgan (9) der Paternostereinrichtung (1) in einer geschlossenen (schleifenförmigen) Bahn bewegt werden, wobei deren Lagerebene horizontal bleibt, sowie mit einer die Produkte (3) übernehmenden Übernahmestation (A) und einer die Produkte (3) an die Stapeleinrichtung (4) übergebenden Übergabestation (B), wobei die Übergabestation (B) einen horizontal angeordneten Endlosförderer (21) aufweist, in dessen Bereich das Transportorgan (9) in der vertikalen Paternosterebene (C) aus der Vertikalen in die Horizontale sowie parallel zu dem Endlosförderer (21) entlang einer gemeinsamen Strecke (D) geführt ist, der mit der Transportgeschwindigkeit der Paternostereinrichtung (1) läuft, und dessen Obertrum dieselbe Laufrichtung aufweist, wie das die Querstrecke (D) durchlaufende Transportorgan der Paternostereinrichtung (1).

2. Beschickungsvorrichtung nach Anspruch 1,
dadurch **gekennzeichnet**,
daß das Transportorgan der Paternostereinrichtung (1) mindestens eine endlos in der vertikalen Paternosterebene (C) geführte Kette (4), insbesondere Gliederkette, aufweist, an der im Abstand voneinander angeordnete paternosterartig geführte, die Produkte (3) lagernde Lagereinrichtungen (10) angeordnet sind.

3. Beschickungsvorrichtung nach Anspruch 2,
dadurch **gekennzeichnet**,
daß die Endlosführung der Gliederkette (9) in der Paternostervertikalebene (C) über zwei zusammenwirkende, in Laufrichtung der Kette (9) in einer horizontalen Ebene auf Abstand hintereinander angeordnete untere Kettenräder (13,14) und über ein oberes Kettenrad (15) sowie auf der Querstrecke (D), über drei hintereinander angeordnete Umlenkkettenräder (22,23,24) erfolgt, von denen das mittlere (23) seitlich neben der vertikalen Paternosterebene (C) unter dem Endlosförderer (21) der Übergabestation (B) und die diesem vor- bzw. nachgeordneten Kettenräder (22,24) seitlich an die Paternosterstrecke (C) angrenzend angeordnet sind, wobei die horizontalen Achsen der Kettenräder (13-15,22-24) senkrecht zur Transportrichtung (12) der Produkte und demgemäß auch die Gliederstifte (9a) der Gliederkette (9) horizontal und senkrecht zur Transportrichtung (12) angeordnet sind.

4. Beschickungsvorrichtung nach Anspruch 3,
dadurch **gekennzeichnet,**
daß das vor dem mittleren Umlenkkettenrad (23) angeordnete Umlenkkettenrad für eine allmähliche Richtungsumlenkung der Gliederkette (9) von der Vertikalen in die Horizontale eine einen größeren Durchmesser aufweist als die beiden anderen Umlenkkettenräder (13,15) der Querstrecke (D).

5. Beschickungsvorrichtung nach einem oder mehreren der Ansprüche 2 bis 4,
dadurch **gekennzeichnet**,
daß die Lagereinrichtungen Transportgabeln (10) sind, die jeweils einen Gabelquersteg (10a) und senkrecht davon abstehende, auf Abstand angeordnete Gabelzinken (10b) aufweisen, wobei der Gabelquersteg (10a) sich parallel zur Transportrichtung (12) erstreckt und derart an der Kette (9) angeordnet ist, daß er und damit auch die nebeneinander angeordnete Reihe der sich senkrecht zur Transportrichtung (12) erstreckenden Gabelzinken (10b) immer eine horizontale Lage einnimmt.

6. Beschickungsvorrichtung nach Anspruch 5,
dadurch **gekennzeichnet,**
daß die Endlosfördereinrichtung der Übergabestation (B) ein parallel zum Gabelquersteg (10a) der Transportgabeln (10) verlaufendes Endlosband (21) umfaßt, dessen Breite geringer ist als die Länge der Gabelzinken (10b) der Transportgabeln (10), und daß die Gabelzinken (10b) im wesentlichen U-förmig mit einer die Breite des Endlosbandes übertreffenden Länge derart tief ausgenommen sind, daß die Gabelzinken (10b) mit ihren nicht ausgenommenen, Auflager für die Produkte (3) bildenden Abschnitten, das Endlosband (21) beidseitig mit Spiel umgreifend, über das Obertrum des Endlosbandes (21) vorstehen.

7. Beschickungsvorrichtung nach Anspruch 5,
dadurch **gekennzeichnet,**
daß die Endlosfördereinrichtung der Übergabestation (B) ein parallel zum Gabelquersteg (10a) der Transportgabel (10) verlaufendes Endlosband (21) umfaßt, dessen Breite geringer ist als die Länge der Gabelzinken (10b) der Transportgabel (10), daß das Endlosband (21) von einer Mehrzahl von auf seitlichen Abstand angeordneten endlosen Riemen (25) gebildet ist, und daß die Gabelzinken (10b) der Mehrzahl der Riemen (25) entsprechende Ausnehmungen (27) mit einem gegenseitigen Abstand sowie einer Tiefe derart aufweist, daß die Gabelzinken (10b) mit ihren nicht ausgenommenen, Auflager für die Produkte (3) bildenden Abschnitten (28) über das Obertrum des Endlosbandes (21), desen einzelne Riemen (25) mit seitlichem Spiel umgreifend, vorstehen.

8. Beschickungsvorrichtung nach Anspruch 7,
dadurch **gekennzeichnet,**
daß Obertrum und Untertrum des Endlosbands (21) im Eingriffsbereich der Transportgabel (10) mit geringstmöglichem gegenseitigen Abstand geführt sind, um die Tiefe der Ausnehmungen (27) und damit die entsprechende Breitenabmessung der Gabelzinken (10b) so gering wie möglich zu halten.

9. Beschickungsvorrichtung nach einem oder mehreren der Ansprüche 1 bis 8,
dadurch **gekennzeichnet**,
daß die Übernahmestation (A) eine horizontal angeordnete Walzenbahn (16) umfaßt, die einlaufseitig am Auslaufende der Antransporteinrichtung (2) beginnt, sich in den Bereich der Bahn der Transportgabeln (10) und ein wenig in ihre Transportrichtung (12) darüber hinaus in die Paternostereinrichtung (1) erstreckt.

10. Beschickungsvorrichtung nach Anspruch 9,
dadurch **gekennzeichnet**,
daß die Walzenbahn (16) aus in Transportrichtung (12) auf bestimmten Abstand voneinander horizontal angeordneten Transportwalzen (18) besteht, deren Achsen sich senkrecht zur Transportrichtung (12) erstrecken und die drehbar derart antreibbar sind, so daß sich auf ihnen befindliche Produkte (3) in Transportrichtung (12) bewegen.

11. Beschickungsvorrichtung nach Anspruch 10,
dadurch **gekennzeichnet**,
daß die Achsen der Transportwalzen (18) der Walzenbahn (16) jeweils in einem sich in Transportrichtung erstreckenden Tragegestell (19) stecken, das auch zumindest Teile der Antriebseinrichtung für die Walzen (18) aufnimmt, wobei die Transportwalzen (18) anderendig nicht miteinander verbunden sind, so daß sie frei aus dem Tragegestell (19) kragen.

12. Beschickungsvorrichtung nach einem oder mehreren der Ansprüche 9 bis 11,
dadurch **gekennzeichnet**,
daß die Lücken (18a) zwischen den Transportwalzen (18) soweit und derart angeordnet sind, daß die Zinken (10b) der Gabeln (10) frei durch die Lücken (18a) zwischen benachbarten Walzen (18) fahren können.

13. Beschickungsvorrichtung nach Anspruch 12,
dadurch **gekennzeichnet**,
daß jedes Tragegestell (19) den Gabelquerstegen (10a) bzw. der Kette (9) gegenüberliegend angeordnet ist, wobei die Gabelzinken (10a) schmaler sind als die Lücken (18a).

14. Beschickungsvorrichtung nach einem oder mehreren der Ansprüche 1 bis 13,
dadurch **gekennzeichnet**,
daß die Paternostereinrichtung (1) zusammen mit der Stapeleinrichtung (4) und der Übergabestation (B) senkrecht zur Transportrichtung (12) horizontal verfahrbar angeordnet ist.

15. Beschickungsvorrichtung nach einem oder mehreren der Ansprüche 1 bis 14,
dadurch **gekennzeichnet,**
daß die Stapeleinrichtung (4) zusammen mit der Übergabestation (B) und den Umlenkwalzen (12,13,14) der Querstrecke (D) senkrecht zur Transportrichtung (12) verfahrbar angeordnet ist.
